# EUROPÄISCHE PATENTANMELDUNG

(11) **EP 4 744 980 A1**
(43) Veröffentlichungstag der Anmeldung: **20.05.2026**
(21) Anmeldenummer: 25216377.9
(22) Anmeldetag: 17.11.2025
(51) Int. Cl.: B60T 8/175, B60W 30/18

(54) **VORRICHTUNG UND VERFAHREN ZUR ANTRIEBS-SCHLUPF-STEUERUNG**

(30) Priorität: 19.11.2024 DE 102024133886
(71) Anmelder: Liebherr-Werk Bischofshofen GmbH, 5500 Bischofshofen (AT)
(72) Erfinder: BÖS, Manuel, 5431 Kuchl (AT); ZEISEL, Michael, 95679 Waldershof (DE); PRODINGER, Philipp, 5500 Bischofshofen (AT); ERIKSSON, Daniel, 5500 Bischofshofen (AT)
(74) Vertreter: Lorenz Seidler Gossel Part. mbB

(57) **Zusammenfassung**

Die vorliegende Erfindung betrifft eine Baumaschine, mit einer Steuereinheit, welche dazu ausgelegt ist, auftretenden Schlupf zu erfassen, indem die Steuereinheit mindestens eine Aktualgröße der Baumaschine mit einer Referenzgröße der Baumaschine vergleicht, wobei die Steuereinheit dazu ausgelegt ist, eine tatsächliche Geschwindigkeit der Baumaschine über dem Boden mittels Sensoren der Baumaschine zu ermitteln, und die ermittelte tatsächliche Geschwindigkeit als Aktualgröße zu verwenden.

## Beschreibung

Die vorliegende Erfindung betrifft eine Vorrichtung und ein Verfahren zur Antriebs-Schlupf-Steuerung.

Formal gibt es Zugkraftübertragung auf den Boden nur mit einem gewissen Grad an Schlupf. Übermäßiger Schlupf (durchdrehende Räder) entsteht, wenn das Rad stärker angetrieben oder gebremst wird, als es die Kraftschlussgrenze zulässt. Diese hängt von verschiedenen Faktoren - Untergrund, Last, Reifendruck, Rollwiderstand etc. - ab.

Zur Vermeidung von Schlupfeffekten ist es einerseits nötig, das Vorliegen von Schlupf zu erkennen und andererseits - bei Schlupferkennung - der Schlupfentstehung gegensteuernde Maßnahmen zu setzen.

Es ist gemäß dem Stand der Technik bekannt, dass zum Erkennen von Schlupf eine Antriebsschlupfregelung ausgeführt wird, bei welcher eine Schlupferkennung über Drehzahlsensoren an verschiedenen Rädern und einen Vergleich der Drehzahl erfolgt.

Ein Beheben von Schlupf erfolgt beispielsweise durch ein gezieltes Brems- und/oder Motorenmanagement (beim PKW beispielsweise durch elektrische Linearantriebe im Fahrwerk).

Nachteilig an derartigen, herkömmlichen Vorgehensweise ist das Erfordernis spezialisierter und somit kostenintensiver Sensoren.

Vor diesem Hintergrund liegt der vorliegenden Erfindung die Aufgabe zugrunde, die Nachteile des Stands der Technik abzumildern oder gar ganz zu beseitigen. Insbesondere liegt der vorliegenden Erfindung die Aufgabe zugrunde, eine Möglichkeit zur kostengünstigen und zuverlässigen Erfassung und Behebung von übermäßigem Schlupf zu schaffen.

Diese Aufgabe wird durch die Gegenstände der unabhängigen Ansprüche gelöst. Vorteilhafte Weiterbildungen der Erfindung sind Gegenstand der abhängigen Ansprüche.

Demnach ist eine Baumaschine mit einer Steuereinheit vorgesehen, welche dazu ausgelegt ist, Schlupf, welcher an mindestens einem Rad der Baumaschine auftritt, zu erfassen, indem die Steuereinheit mindestens eine Aktualgröße der Baumaschine mit einer Referenzgröße der Baumaschine vergleicht. Die Steuereinheit ist dazu ausgelegt, eine tatsächliche Geschwindigkeit der Baumaschine über dem Boden mittels Sensoren der Baumaschine zu ermitteln, und die ermittelte tatsächliche Geschwindigkeit als Aktualgröße zu verwenden. Die Baumaschine weist somit einen oder mehrere Sensoren auf, deren Messwerte bzw. Daten der Steuereinheit zugeführt werden, die die tatsächliche Geschwindigkeit der Baumaschine über dem Boden zu bestimmen.

Die Aktualgröße kann eine gemessene tatsächliche Geschwindigkeit der Baumaschine und / oder mindestens ein Wert einer Maschinenvariable und / oder eine auf der Grundlage des mindestens einen Werts einer Maschinenvariable abgeschätzte Geschwindigkeit der Baumaschine sein.

Der Begriff der "Aktualgröße" ist somit vorzugsweise weit auszulegen und umfasst nicht lediglich eine tatsächlich vorliegende Messgröße, z.B. einen Druckwert von 1 bar oder eine Geschwindigkeit von 10 km/h, sondern auch daraus abgeleitete Größen, beispielsweise eine aus dem gemessenen Druckwert von 1 bar abgeleitete Geschwindigkeit von 8 km/h.

Der Begriff "Maschinenvariable" bezeichnet vorzugsweise einen variablen Parameter der Maschine, beispielsweise ein Antriebsdrehmoment, einen Druck, Vibrationswert, eine Gaspedalstellung, eine Temperatur etc.. Im weitesten Sinne bezeichnet dieser Begriff einen variablen Parameter, welcher im Zusammenhang mit der Baumaschine steht bzw. deren Betrieb widerspiegelt.

Die Referenzgröße kann eine Antriebsgeschwindigkeit mindestens eines Rads der Baumaschine, eine Antriebsgeschwindigkeit der Baumaschine, eine Gelenkswellendrehzahl, eine Getriebeausgangsdrehzahl und / oder mindestens ein auf der Grundlage der Antriebsgeschwindigkeit abgeschätzter Wert einer Maschinenvariable sein.

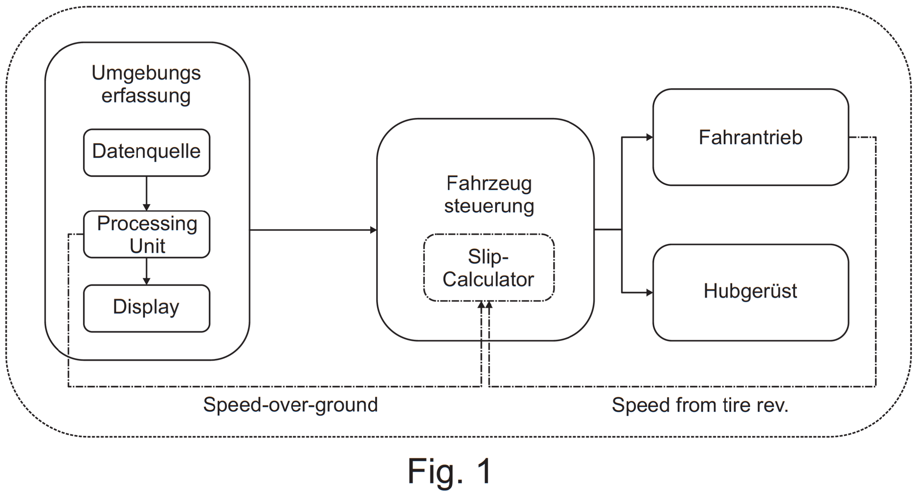

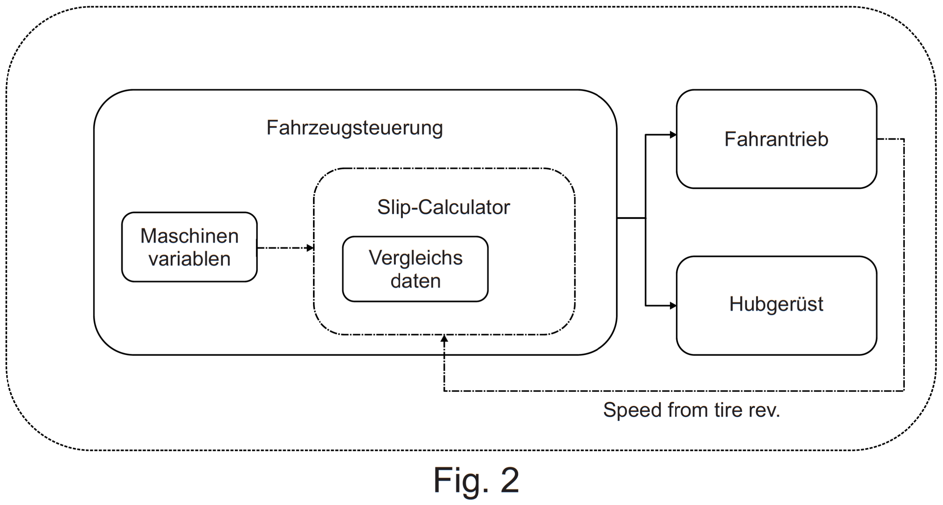

Beispiele von Vergleichen von Aktualgrößen und Referenzgrößen, welche mittels einer erfindungsgemäßen Steuereinheit ausgeführt werden können, sind in der im Kontext der Figuren 1 und 2 diskutierten Tabelle 1 zusammengefasst.

Bei dem oder den Sensoren der Baumaschine, die zur Bestimmung der tatsächlichen Geschwindigkeit verwendet werden, kann es sich beispielsweise um einen optischen Sensor, wie eine Kamera oder auch um einen Bewegungssensor handeln.

Die Steuereinheit kann dazu ausgelegt sein, eine tatsächliche Geschwindigkeit der Baumaschine über dem Boden vorzugsweise durch einen Rückgriff auf historische Daten und / oder Sensordaten bezüglich mindestens einer Maschinenvariable abzuschätzen, und die ermittelte abgeschätzte Geschwindigkeit als Aktualgröße zu verwenden.

Die Steuereinheit kann dazu ausgelegt sein, einen erwarteten Wert mindestens einer Maschinenvariable auf der Grundlage einer erfassten Antriebsgeschwindigkeit der Baumaschine zu ermitteln und den ermittelten erwarteten Wert der mindestens einen Maschinenvariable als Referenzgröße zu verwenden.

Die Steuereinheit kann dazu ausgelegt sein, wenn der Vergleich der Aktualgröße mit der Referenzgröße eine Abweichung und / oder eine Abweichung über einen Toleranzbereich hinaus ergibt, das Auftreten von Schlupf an der Baumaschine bzw. an mindestens einem Rad der Baumaschine zu erfassen.

Die Steuereinheit kann dazu ausgelegt sein, wenn ein Auftreten von Schlupf an der Baumaschine erfasst wurde, eine Steuerung zur zumindest teilweisen Unterbindung des Schlupfes auszuführen, bei welcher vorzugsweise eine Traktion mindestens eines Rads der Baumaschine am Untergrund durch eine Erhöhung der Achslast erhöht wird.

Die Unterbindung ist vorzugsweise deshalb "zumindest teilweise", weil zwischen den Rädern der Baumaschine und dem Untergrund bei einer Bewegung der Baumaschine stets ein gewisser Anteil von Schlupf besteht. Völlige Abwesenheit von Schlupf lässt sich nur durch einen Stillstand der Baumaschine erreichen. Erfindungsgemäß soll jedoch vorzugsweise lediglich übermäßiger Schlupf, welcher über einen Toleranzbereich hinausgeht, unterbunden werden.

Die Steuereinheit kann dazu ausgelegt sein, bei der Steuerung zur Unterbindung des Schlupfes den Anpressdruck mindestens eines Rades der Baumaschine am Untergrund und / oder die Reibung mindestens eines Rades an dem Untergrund zu erhöhen.

Die Steuereinheit kann dazu ausgelegt sein, bei der Steuerung zur Unterbindung des Schlupfes ein bewegliches Element der Baumaschine, vorzugsweise einen Ausleger und / oder ein Hubgerüst und / oder eine Arbeitsausrüstung und / oder eine Baggerschaufel, derart zu positionieren, dass der Anpressdruck mindestens eines Rades am Untergrund und / oder die Reibung mindestens eines Rades an dem Untergrund erhöht wird.

Die Steuereinheit kann dazu ausgelegt sein, das bewegliche Element translatorisch zu verfahren, vorzugsweise durch Verfahren eines telekopierbaren Abschnitts des beweglichen Elements, und / oder rotatorisch zu verfahren, vorzugsweise durch Verschwenken in vertikaler und / oder horizontaler Richtung.

Vorzugsweise ist eine erfindungsgemäße Baumaschine zum autonomen Fahren und / oder Betrieb ausgelegt.

Ein weiterer Aspekt der vorliegenden Erfindung betrifft ein Verfahren zur Erfassung und Behebung von Schlupf bei einer Baumaschine gemäß der Erfindung, mit den Schritten:
- Vergleichen mindestens einer Aktualgröße der Baumaschine mit einer Referenzgröße der Baumaschine, wobei die Aktualgröße vorzugsweise eine gemessene tatsächliche Geschwindigkeit der Baumaschine und / oder mindestens ein Wert einer Maschinenvariable und / oder eine auf der Grundlage des mindestens einen Wert einer Maschinenvariable abgeschätzte Geschwindigkeit der Baumaschine ist und die Referenzgröße eine Antriebsgeschwindigkeit der Baumaschine, eine Gelenkswellendrehzahl, eine Getriebeausgangsdrehzahl und / oder mindestens ein auf der Grundlage der Antriebsgeschwindigkeit abgeschätzter Wert einer Maschinenvariable ist, und
- wenn der Vergleich der Aktualgröße mit der Referenzgröße eine Abweichung und / oder eine Abweichung über einen Toleranzbereich hinaus ergibt, Erfassen eines Auftretens von Schlupf an dem mindestens einen Rad der Baumaschine.

Weiterhin kann ein erfindungsgemäßes Verfahren den Schritt aufweisen:
- wenn ein Auftreten von Schlupf an der Baumaschine erfasst wurde, Ausführen einer Steuerung zur zumindest teilweisen Unterbindung des Schlupfes, bei welcher vorzugsweise durch eine entsprechende Positionierung mindestens eines beweglichen Elements der Baumaschine eine Traktion des mindestens einen Rads am Untergrund erhöht wird, vorzugsweise indem ein Anpressdruck des mindestens einen Rades am Untergrund und / oder die Reibung des mindestens einen Rades an dem Untergrund erhöht wird.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figur. Hierbei zeigt
- Figur 1:: eine Steuereinheit einer erfindungsgemäßen Baumaschine gemäß einer ersten Ausführungsform;
- Fig. 2:: eine Steuereinheit einer erfindungsgemäßen Baumaschine gemäß einer zweiten Ausführungsform;
- Fig. 3:: eine erfindungsgemäße Baumaschine gemäß einer ersten Ausführungsform, und
- Fig.4:: eine erfindungsgemäße Baumaschine gemäß einer zweiten Ausführungsform.

Fig. 1 zeigt eine Steuereinheit einer erfindungsgemäßen Baumaschine, welche dazu ausgelegt ist, einen Schlupferkennung durch einen Vergleich von zwei gemessenen Fahrgeschwindigkeitssignalen auszuführen.

Erfindungsgemäß erfolgt die Schlupferkennung grundsätzlich durch einen Abgleich von zueinander in Relation stehender Signale, die von unterschiedlich ausgebildeten Datenquellen stammen, wobei die erste Datenquelle immer vom Fahrantrieb gebildet ist.

Gemäß Fig. 1 erfolgt eine Ermittlung eines vom Geschwindigkeitssignal des Fahrantriebs ("speed from tire") verschiedenen, zweiten Geschwindigkeitssignals ("speed-over-ground").

Diese zwei, aus zwei unterschiedlich Datenquellen ermittelten, Bewegungsgeschwindigkeiten werden daraufhin verglichen, um auf eventuell vorliegenden übermäßigen Schlupf schließen zu können
Beispielsweise kann durch eine optische/akustische Erfassung von Umgebungsdaten (in anderen Worten, Umfeld-bezogener Daten) ein vom Fahrantrieb unabhängiges, zweites Geschwindigkeitssignal erzeugt ("speed-over-ground").

Die Umgebungsdaten können mittels mindestens eines der nachstehenden Sensoren erfasst werden:
- Kamera (bspw. serienmäßige Rückfahrkamera oder System für Personenerkennung) z.B. mittels Optical Flow Algorithmus
- LiDAR (Light Detection and Ranging) - basierte Lokalisierung
- Radar-basierte Lokalisierung
- andere Sensormodalitäten zur Umfelderfassung, bspw Ultraschall

Hierbei ist zu beachten, dass die genannte Lokalisierung nicht zwingend eine komplette Lokalisierung sein muss, vielmehr kann ein Geschwindigkeitssignal auch aus den Sensor-Rohdaten extrahiert werden, indem die Relativbewegung zwischen Sensor und Umgebung ausgewertet wird. Somit ist die Lokalisierung vorzugsweise nur eine teilweise Lokalisierung.

Fig. 2 zeigt eine Steuereinheit einer erfindungsgemäßen Baumaschine, welche dazu ausgelegt ist, einen Schlupferkennung bzw. Schlupfprognostizierung durch einen Abgleich von in der Maschinensteuerung vorliegenden Aktualdaten bzw. tatsächlichen Daten (also vorzugsweise Aktualgrößen) mit hinterlegten Vergleichsdaten (auch als Referenzgrößen bezeichenbar) auf Basis des Geschwindigkeitssignals des Fahrantriebes auszuführen.

Die Varianten gemäß Fig. 1 und Fig. 2 können alternativ oder zusätzlich zueinander in einer erfindungsgemäßen Baumaschine zum Einsatz kommen.

Mittels eines Softwarebausteins werden, wie in Fig. 2 gezeigt, z.B. aktuell vorliegende Maschinenvariablen - z.B. Antriebsdrehmomente, Drücke, Vibrationswerte, Gaspedalstellungen, Temperaturen etc. - mit hinterlegten Vergleichsdaten, welche beispielsweise einer vorgegebenen Antriebsgeschwindigkeit entsprechen, abgeglichen und als Ergebnis wird das Vorliegen von Schlupf an mindestens einem Rad beurteilt.

Grundsätzlich sind zwei Arten des Datenabgleichs bei der Ausführungsform in Fig. 2 denkbar:
Bei der ersten Variante der Ausführungsform aus Fig. 2 wird ein zweites Geschwindigkeitssignal erzeugt, indem anhand der hinterlegten Vergleichsdaten aus den vorliegenden aktuellen Maschinenvariablen ein prognostiziertes zweites Geschwindigkeitssignal ermittelt wird.

Dieses prognostizierte zweite Geschwindigkeitssignal wird dann mit dem Geschwindigkeitssignal vom Fahrantrieb verglichen.

Beispielsweise wird die Geschwindigkeit von 50 Umdrehungen pro Minute des Rades bzw. eine Geschwindigkeit der Baumaschine von 10 km/h am Fahrantrieb ausgelesen (erstes Geschwindigkeitssignal).

Aus den vorliegenden aktuellen Maschinenvariablen bzw. Parametern der Einstellung der Baumaschine (Drücke, Drehmomente, Temperaturen, Steuerungsbefehle etc.) ergibt sich, beispielsweise unter Rückgriff auf historische Daten, dass sich die Baumaschine aktuell nur mit einer geschätzten Geschwindigkeit von 6 km/h bewegt. Dies legt nahe, dass die Räder aufgrund von Schlupf durchdrehen und sich die Baumaschine daher nicht so schnell bewegt wie vorgegeben.

Im Gegensatz zu der Variante aus Fig. 1 wird somit gemäß der Ausführungsform von Fig. 2 die "Speed-over-Ground" nicht gemessen, sondern aufgrund der in einer Datenbank abgelegten Maschinenvariablen bzw. Parameter der Einstellung der Baumaschine (Drücke, Drehmomente, Temperaturen, Steuerungsbefehle etc.) abgeschätzt.

Bei der zweiten Variante der Ausführungsform aus Fig. 2 wird überhaupt kein zweites Geschwindigkeitssignal erzeugt, sondern es erfolgt ein Abgleichen der aktuellen Maschinevariablen mit prognostizierten Werten von Maschinenvariablen.

Die Erfassung von Schlupf erfolgt somit auf dem Level der Maschinenvariablen bzw. Parameter der Einstellung der Baumaschine (Drücke, Drehmomente, Temperaturen, Steuerungsbefehle etc.).

Beispielsweise werden aufgrund des Geschwindigkeitssignals vom Fahrantrieb prognostizierte Vergleichsdaten der Maschinenvariablen bzw. Parameter der Einstellung der Baumaschine bereitgestellt und die aktuellen Maschinenvariablen werden mit diesen prognostizierten Werten abgeglichen.

Beispielsweise wird aufgrund der Vorgabe am Fahrantrieb beispielsweise durch einen Rückgriff auf historische Daten prognostiziert, dass bei einer solchen Vorgabe am Fahrantrieb, ein Druck von 1 bar in einer bestimmten Leitung bestehen sollte.

Dieser Wert wird dann mit dem tatsächlichen Druck in dieser Leitung verglichen. Beispielsweise beträgt der tatsächliche Druck nur 0,7 bar, weil die Räder durchdrehen und deswegen weniger Druck aufgebaut wird. Auch dies indiziert Schlupf.

Allgemein formuliert werden somit erfindungsgemäß Aktualgrößen (auch als Aktualdaten bezeichenbar) mit Referenzdaten (auch als Referenzgrößen bezeichnenbar) verglichen, um auf Schlupf an mindestens einem Rad zu schließen.

Die Aktualgrößen sind vorzugsweise die tatsächliche Geschwindigkeit ("Speed-o-ver-Ground") und / oder mindestens eine Maschinenvariable (auch als Parameter der Einstellung der Baumaschine bezeichnet), aus der beispielsweise eine erwartete Geschwindigkeit hergeleitet werden kann.

Die Referenzdaten können eine gemessene Antriebsgeschwindigkeit und / oder eine beispielsweise auf der Grundlage der gemessenen Antriebsgeschwindigkeit abgeschätzte Maschinenvariable sein.

Die vorstehend erläuterten Varianten sind nachstehend in Tabelle 1 zusammengefasst:

**Tabelle 1**

| **Aktualgröße** | **Referenzgröße** |
|---|---|
| Tatsächliche Geschwindigkeit, "Speed over Ground", z.B. 10 km/h | Antriebsgeschwindigkeit, z.B. 12 km/h |
| Tatsächlich vorliegende Maschinenvariable, z.B. ein Druck von 1 bar; | Antriebsgeschwindigkeit, z.B. 12 km/h |
| aus der Maschinenvariable wird vorzugsweise eine geschätzte / prognostizierte Geschwindigkeit hergeleitet, z.B. 10 km/h. | |
| In anderen Worten wird die "Speed-o-ver-Ground" nicht gemessen, sondern hergeleitet | |
| Tatsächlich vorliegende Maschinenvariable, z.B. ein Druck von 1 bar | Antriebsgeschwindigkeit, auf der Grundlage der Antriebsgeschwindigkeit wird eine geschätzte / prognostizierte Maschinenvariable ermittelt, |
| | z.B. wird bei einer Geschwindigkeit von 12 km /h ein Druck von 1,1 bar in der entsprechenden Leitung erwartet |

Die gezeigten Varianten können alternativ oder zusätzlich im Rahmen der vorliegenden Erfindung zum Einsatz kommen.

Der Abgleich der Aktualgrößen mit den Referenzgrößen kann wie folgt erfolgen.

Es kann eine KI-basierte Auswertung erfolgen. Anhand von Trainingsdaten hat die KI in diesem Fall gelernt bzw. lernt die KI das Vorliegen von übermäßigem Schlupf abzuleiten. Für die Trainingsphase können beispielsweise Ergebnisse aus der Schlupferkennung nach Fig. 1 genutzt werden. Beispielsweise kann ein neuronales Netz (CNN) zum Einsatz kommen.

Alternativ oder zusätzlich kann die Auswertung ingenieurstechnisch erfolgen. In diesem Fall wurden die Regeln zur Schlupfbeurteilung z.B. aus dem Abgleich zwischen den aktuellen Maschinenvariablen und den hinterlegten Vergleichsdaten empirisch ermittelt. Bei dieser zweiten Variante erspart man sich die Umfelderkennung und damit zusätzliche Kosten.

In beiden Fällen erfolgt die Auswertung vorzugsweise mittels einer entsprechend ausgelegten Steuereinheit der Baumaschine.

Wie vorstehend dargelegt, bietet es sich somit insbesondere bei Arbeitsmaschinen (auch als Baumaschinen bezeichnet) an, an der Maschine vorhandene Datenquellen zur Schlupferkennung zu nutzen und somit den Einbau von Drehzahlsensoren an den Rädern zu vermeiden.

Für den Fall, dass Schlupf erkannt/prognostiziert wird - unabhängig davon, wie die Schlupferkennung erfolgt ist - wird erfindungsgemäß dem übermäßigen Schlupf bei einer Arbeitsmaschine entgegengewirkt.

Dies erfolgt vorzugsweise bei einer Baumaschine mit einem Hubgerüst durch Erhöhung der Last auf die Achse, (zur Verbesserung der Traktion) über eine Lageveränderung des Hubgerüsts mittels Hub- und/oder Kippzylinder entgegengewirkt.

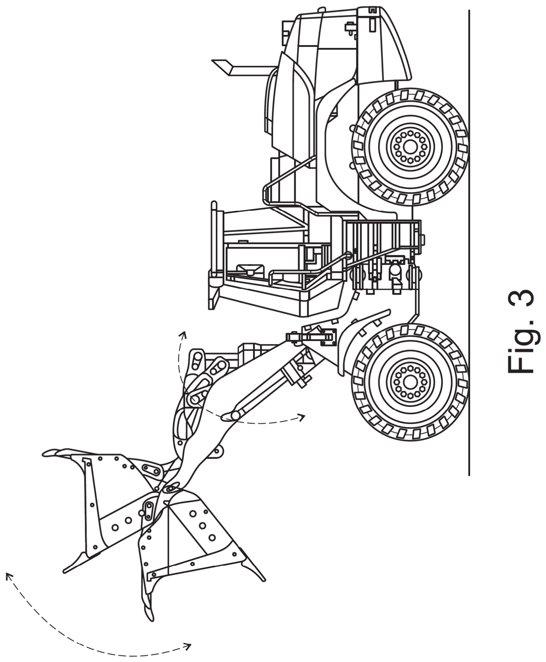

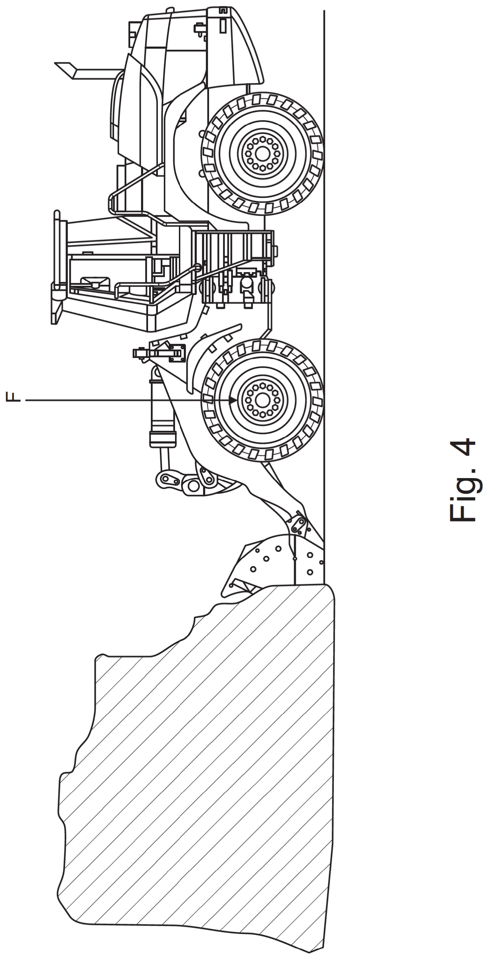

Dies wird in den Figuren 3 und 4 beispielhaft erläutert.

Wie in Fig. 3 gezeigt, kann bei Arbeitsmaschinen mit einem Hubgerüst (und vorzugsweise einer daran angeordneten Arbeitsausrüstung, in diesem Beispiel eine Baggerschaufel) die Traktion durch Erhöhung der Last auf die Vorderachse verbessert werden.

Die Arbeitshydraulik umfasst in dem gezeigten Beispiel einen oder mehrere Hubzylinder zum Verändern der Lage des Hubgerüsts und einen oder mehrere Kippzylinder zum Verändern der Lage der Arbeitsausrüstung / Baggerschaufel.

Jede Lageveränderung des Hubgerüsts und / oder der Arbeitsausrüstung (in der Figur durch gestrichelte Linien angedeutet) hat eine Änderung des Schwerpunkts zur Folge, wodurch sich die auf die Achse wirkenden Kraft und damit die resultierende Traktion verändert.

Wird das Auftreten von Schlupf an mindestens einem Rad erfasst, dann initiiert die Steuereinheit vorzugsweise mindestens einen der nachstehenden Vorgänge, um die Kraft auf die Achse des betreffenden Rads zu erhöhen:
- Steuerung zur Verbesserung der Traktion durch eine Lageveränderung des Hubgerüsts mittels einer Ansteuerung der Hubzylinder; und / oder
- Steuerung zur Verbesserung der Traktion durch eine Lageveränderung der Arbeitsausrüstung mittels einer Ansteuerung der Kippzylinder, und / oder
- Kombination einer Steuerung zur Lageveränderung von Hubgerüst und Arbeitsausrüstung

In manchen Anwendungsfällen ist der Effekt einer reinen Bewegung der Ausrüstung beim Fahren zur Beeinflussung der Achslast relativ gering, da die Schaufel aus Gründen der Sicht und Kippsicherheit in der Transportstellung verbleiben sollte.

Daher hat es sich in der Praxis als besonders vorteilhaft ausgeführt, eine entsprechende Steuerung während eines durch die Baumaschine ausgeführten Grabevorgangs auszuführen, während dessen sich die Baumaschine mit der Schaufel am Haufwerk abstützen kann, wodurch die Achslast stärker beinflussbar ist.

Vorzugsweis ist eine Steuereinheit einer erfindungsgemäßen Vorrichtung daher dazu ausgelegt, einen durch die Baumaschine ausgeführten Grabevorgang zu erfassen und während des Grabevorgangs eine Steuerung zur Unterbindung von Schlupf auszuführen.

Bei Arbeitsmaschinen mit einem Hubgerüst und daran angeordneter Arbeitsausrüstung wird während des Kontakts Hubgerüst/Arbeitsausrüstung mit dem Transportmaterial die Traktion durch Erhöhung der Last auf die Vorderachse verbessert.

Dies wird in Fig. 4 illustriert.

Bei einem Radlader mit einer Schaufel als Arbeitsausrüstung schiebt die Maschine beim Schaufelfüllvorgang gegen ein Haufwerk und übermäßiger Schlupf entsteht sehr schnell, sodass die aufgebrachte Zugkraft nicht mehr durch Antrieb, sondern durch Durchdrehen der Räder abgebaut wird.

Durch ein Anheben oder Einkippen der Schaufel wird durch die Steuereinheit die Achslast vorne erhöht, was die Traktion (der Anpressdruck auf die Vorderachse/Hinterachse) verbessert und dem Schlupf entgegengewirkt.

Insbesondere bei autonomen Radladern, die softwaremäßig grundsätzlich hochwertig ausgestattet sind, bietet sich im Allgemeinen die Anwendung der vorliegenden Erfindung an.

## Patentansprüche

1. Baumaschine, mit einer Steuereinheit, welche dazu ausgelegt ist, auftretenden Schlupf zu erfassen, indem die Steuereinheit mindestens eine Aktualgröße der Baumaschine mit einer Referenzgröße der Baumaschine vergleicht, wobei die Steuereinheit dazu ausgelegt ist, eine tatsächliche Geschwindigkeit der Baumaschine über dem Boden mittels Sensoren der Baumaschine zu ermitteln, und die ermittelte tatsächliche Geschwindigkeit als Aktualgröße zu verwenden.

2. Baumaschine gemäß Anspruch 1, wobei die Aktualgröße eine gemessene tatsächliche Geschwindigkeit der Baumaschine und / oder mindestens ein Wert einer Maschinenvariable und / oder eine auf der Grundlage des mindestens einen Werts einer Maschinenvariable abgeschätzte Geschwindigkeit der Baumaschine ist.

3. Baumaschine gemäß Anspruch 1 oder 2, wobei die Referenzgröße eine Antriebsgeschwindigkeit der Baumaschine, eine Gelenkswellendrehzahl, eine Getriebeausgangsdrehzahl und / oder mindestens ein auf der Grundlage der Antriebsgeschwindigkeit abgeschätzter Wert einer Maschinenvariable ist.

4. Baumaschine gemäß einem der vorhergehenden Ansprüche, wobei es sich bei dem oder den Sensoren der Baumaschine zur Messung der tatsächlichen Geschwindigkeit über dem Boden um einen optischen Sensor, vorzugsweise um eine Kamera, und/oder um einen Bewegungssensor handelt.

5. Baumaschine gemäß einem der vorhergehenden Ansprüche, wobei die Steuereinheit dazu ausgelegt ist, eine tatsächliche Geschwindigkeit der Baumaschine über dem Boden vorzugsweise durch einen Rückgriff auf historische Daten und / oder Sensordaten bezüglich mindestens einer Maschinenvariable abzuschätzen, und die ermittelte abgeschätzte Geschwindigkeit als Aktualgröße zu verwenden.

6. Baumaschine gemäß einem der vorhergehenden Ansprüche, wobei die Steuereinheit dazu ausgelegt ist, einen erwarteten Wert mindestens einer Maschinevariable auf der Grundlage einer erfassten Antriebsgeschwindigkeit der Baumaschine zu ermitteln und den ermittelten erwarteten Wert der mindestens einen Maschinenvariable als Referenzgröße zu verwenden.

7. Baumaschine gemäß einem der vorhergehenden Ansprüche, wobei die Steuereinheit dazu ausgelegt ist, wenn der Vergleich der Aktualgröße mit der Referenzgröße eine Abweichung und / oder eine Abweichung über einen Toleranzbereich hinaus ergibt, das Auftreten von Schlupf zu erfassen.

8. Baumaschine gemäß einem der vorhergehenden Ansprüche, wobei die Steuereinheit dazu ausgelegt ist, wenn ein Auftreten von Schlupf erfasst wurde, eine Steuerung zur zumindest teilweisen Unterbindung des Schlupfes auszuführen, bei welcher vorzugsweise eine Traktion an mindestens einem Rad am Untergrund durch eine Erhöhung der Achslast erhöht wird.

9. Baumaschine gemäß Anspruch 8, wobei die Steuereinheit dazu ausgelegt ist, bei der Steuerung zur Unterbindung des Schlupfes den Anpressdruck mindestens eines Rades am Untergrund und / oder die Reibung mindestens einen Rades an dem Untergrund zu erhöhen.

10. Baumaschine gemäß Anspruch 9, wobei die Steuereinheit dazu ausgelegt ist, bei der Steuerung zur Unterbindung des Schlupfes ein bewegliches Element der Baumaschine, vorzugsweise einen Ausleger und / oder ein Hubgerüst und / oder eine Arbeitsausrüstung, derart zu positionieren, dass der Anpressdruck mindestens eines Rades am Untergrund und / oder die Reibung mindestens einesRades an dem Untergrund erhöht wird.

11. Baumaschine gemäß Anspruch 10, wobei die Steuereinheit dazu ausgelegt ist, das bewegliche Element translatorisch zu verfahren, vorzugsweise durch Verfahren eines telekopierbaren Abschnitts des beweglichen Elements, und / oder rotatorisch zu verfahren, vorzugsweise durch Verschwenken in vertikaler und / oder horizontaler Richtung.

12. Verfahren zur Erfassung und zumindest teilweisen Behebung von Schlupf bei einer Baumaschine gemäß eines der vorhergehenden Ansprüche, mit den Schritten:
- Vergleichen mindestens einer Aktualgröße der Baumaschine mit einer Referenzgröße der Baumaschine, wobei die Aktualgröße vorzugsweise eine gemessene tatsächliche Geschwindigkeit der Baumaschine und / oder mindestens ein Wert einer Maschinenvariable und / oder eine auf der Grundlage des mindestens einen Werts einer Maschinenvariable abgeschätzte Geschwindigkeit der Baumaschine ist und die Referenzgröße eine Antriebsgeschwindigkeit mindestens eines Rads der Baumaschine, eine Gelenkswellendrehzahl, eine Getriebeausgangsdrehzahl und / oder mindestens ein auf der Grundlage der Antriebsgeschwindigkeit abgeschätzter Wert einer Maschinenvariable ist, und
- wenn der Vergleich der Aktualgröße mit der Referenzgröße eine Abweichung und / oder eine Abweichung über einen Toleranzbereich hinaus ergibt, Erfassen eines Auftretens von Schlupf an der Baumaschine.

13. Verfahren gemäß Anspruch 12, weiterhin mit dem Schritt:
- wenn ein Auftreten von Schlupf an der Baumaschine erfasst wurde, Ausführen einer Steuerung zur Unterbindung des Schlupfes, bei welcher vorzugsweise durch eine entsprechende Positionierung mindestens eines beweglichen Elements der Baumaschine eine Traktion mindestens eines Rads am Untergrund erhöht wird, vorzugsweise indem ein Anpressdruck mindestens eines Rades am Untergrund und / oder die Reibung mindestens eines Rades an dem Untergrund erhöht wird.
